# DEMANDE DE BREVET EUROPEEN

(11) **EP 4 312 121 A1**
(43) Date de publication de la demande: **31.01.2024**
(21) Numéro de dépôt: 22306142.5
(22) Date de dépôt: 29.07.2022
(51) Int. Cl.: G06F 9/48, G06F 9/50

(54) **PROCÉDÉ D'ALLOCATION DE RESSOURCES INFORMATIQUES DANS UNE INFRASTRUCTURE INFORMATIQUE**

(71) Demandeur: BULL SAS, 78340 Les Clayes-Sous-Bois (FR)
(72) Inventeur: GERPHAGNON, Jean-Olivier, 38450 Vif (FR)
(74) Mandataire: Cabinet Camus Lebkiri

(57) **Abrégé**

Un aspect de l'invention concerne un procédé (100) d'allocation de ressource informatique à au moins un travail à exécuter, comportant les étapes :
- réception (101) d'au moins une requête d'allocation de ressources informatiques pour exécuter un travail, la requête comprenant au moins une ressource matérielle et au moins une durée d'exécution du travail,
- détermination (102) d'allocation à partir de la requête et d'une disponibilité de la pluralité de ressources informatiques, chaque allocation comprenant :
o un ensemble de ressources informatiques parmi la pluralité de ressources informatiques (20),
o une date d'allocation,
o une durée d'utilisation déterminée à partir de la date d'allocation et de la durée d'exécution du travail,

pour chaque allocation déterminée :
- estimation (103) d'une empreinte carbone à partir d'une empreinte carbone de matériel et d'une empreinte carbone d'utilisation,
- création (104) d'une liste comprenant chaque allocations déterminée et l'empreinte carbone estimée associée,
- réception (105), par l'infrastructure informatique (2), d'une allocation parmi les allocations de la liste,
- allocation (106).

## Description

### DOMAINE TECHNIQUE DE L'INVENTION

Le domaine technique de l'invention est celui des infrastructures informatiques, en particulier des calculateurs haute performance (HPC pour « High Performance Computer » en anglais), et plus particulièrement celui des gestionnaires de travaux utilisés dans ces calculateurs pour allouer les ressources de calcul de façon optimale.

La présente invention concerne la gestion des travaux soumis à une infrastructure informatique et plus particulièrement un procédé, un programme d'ordinateur ainsi qu'un système d'allocation de ressources informatiques du calculateur permettant de prendre en compte l'empreinte carbone pour l'exécution de travaux soumis à l'infrastructure.

### ARRIERE-PLAN TECHNOLOGIQUE DE L'INVENTION

Le calcul haute performance (HPC) se caractérise souvent par les systèmes informatiques utilisés par les scientifiques et les ingénieurs pour modéliser, simuler et analyser des phénomènes physiques ou algorithmiques complexes.

De tels systèmes reposent sur trois composants : la machine, le logiciel, les applications.

Actuellement, les machines HPC sont généralement conçues à l'aide de nombreux serveurs de calcul, appelés nœuds, mis en réseau sous forme de grappes pour former ce que l'on appelle un cluster. Un nœud est plus précisément un équipement de base de calcul. Il comprend différents composants électroniques (processeur, mémoire, etc.) et présente des caractéristiques spécifiques telles que le nombre de cœurs, chaque cœur formant une unité de calcul, ou une taille de mémoire. Une machine peut compter des milliers de nœuds regroupés en une pluralité de clusters interconnectés.

Une machine HPC reçoit généralement des milliers de demandes de travaux à exécuter. Ces travaux correspondent à des programmes logiciels, des applications, des algorithmes.

Pour fonctionner au maximum de ses performances, un environnement HPC doit exécuter les travaux simultanément sur les serveurs d'une même grappe pour leur permettre d'opérer en parallèle.

Pour cela, un environnement HPC comprend généralement une unité de contrôle et de commande pourvue d'un programme spécial appelé gestionnaire de travaux ou ordonnanceur ou encore « scheduler » en anglais.

Ce programme est configuré pour recevoir un certain nombre de travaux à exécuter, soumis au calculateur HPC, et déterminer l'allocation des ressources informatiques (composants d'un nœud ou d'une pluralité de nœuds) du calculateur HPC pour exécuter chaque travail soumis de sorte que chaque composant opère en rythme avec les autres. Les ressources informatiques allouées forment ce qu'on appelle une zone de traitement, ou zone de calcul.

Le gestionnaire de travaux est capital dans l'utilisation des ressources de calcul. En effet, de façon générale, il y a toujours plus de travaux demandés que de ressources disponibles pour les exécuter immédiatement, ou simultanément. Le gestionnaire de travaux permet de gérer l'allocation des ressources pour exécuter les tâches demandées tout en permettant un usage optimal des ressources.

L'allocation des ressources est de façon générale réalisée en fonction de divers critères, le plus souvent physiques, liés au travail à exécuter, et/ou de niveaux de priorité d'exécution du travail. Les critères liés au travail à exécuter comprennent généralement le nombre de ressources informatiques requis (i.e. le nombre de nœuds ou le nombre de cœurs de calcul), le type de ressources, la durée du travail prévue, la priorité attribuée au travail, la priorité attribuée à l'utilisateur. En réponse à une pluralité de demandes de travail, le gestionnaire de travaux alloue les ressources optimales, au moment de la demande, et calcule une priorité d'exécution des travaux en fonction de l'ensemble des critères précités, ou potentiellement sur un sous-ensemble de ces critères.

Récemment, un gestionnaire de travaux a pris en compte un critère supplémentaire lié à la consommation en énergie des ressources requises pour exécuter un travail. Cependant, ce critère ne prend pas en compte une consommation énergétique réelle des ressources. Il s'agit plutôt d'un critère qualitatif représentatif d'une efficacité énergétique. Trois niveaux sont alors définis du plus consommateur en énergie au moins consommateur en énergie : « énergétiquement inefficace », « moyennement efficace », et « énergétiquement efficace ». Un tel critère est établi, par exemple, à partir du taux d'utilisation d'une ressource. Ainsi, une application allouée à une ressource telle qu'un GPU et n'utilisant cette ressource que 10% du temps conduit à un critère dit « énergétiquement inefficace », c'est-à-dire que 90% de la ressource est inutilisée et consomme inutilement de l'énergie.

Réduire l'impact énergétique et donc écologique des travaux exécutés par un calculateur HPC est l'un des défis majeurs du calcul haute performance.

Il existe donc un besoin d'avoir un gestionnaire de travaux capable d'optimiser l'impact écologique de calculs réalisés par un calculateur HPC.

### RESUME DE L'INVENTION

L'invention offre une solution aux problèmes évoqués précédemment, en permettant de calculer dynamiquement une empreinte carbone globale associé à un travail, et en intégrant ce calcul comme nouveau critère d'allocation des ressources dans un gestionnaire de travaux.

Un premier aspect de l'invention concerne un procédé mis en œuvre par ordinateur, d'allocation d'au moins une ressource informatique d'une infrastructure informatique à au moins un travail à exécuter, l'infrastructure informatique comprenant une pluralité de ressources informatiques, le procédé comportant les étapes suivantes :
- réception d'au moins une requête d'allocation de ressources informatiques pour exécuter un travail, la requête comprenant au moins une ressource matérielle et au moins une durée d'exécution du travail,
- détermination d'au moins une allocation de ressources informatiques pour exécuter le travail à partir de la requête reçue et d'une disponibilité de la pluralité de ressources informatiques, chaque allocation déterminée comprenant :
   o un ensemble de ressources informatiques déterminé parmi la pluralité de ressources informatiques,
   o une date d'allocation de l'ensemble de ressources informatiques au travail,
   o une durée d'utilisation de l'ensemble de ressources informatiques, ladite durée d'utilisation étant déterminée à partir de la date d'allocation et de la durée d'exécution du travail,

le procédé étant caractérisé en ce qu'il comporte les étapes suivantes :
   - pour chaque allocation déterminée :
      o estimation d'une empreinte carbone à partir d'une empreinte carbone de matériel dudit ensemble de ressources informatiques, et à partir d'une empreinte carbone d'utilisation dudit ensemble de ressources informatiques pour l'exécution du travail,
   - création d'une liste comprenant chaque allocations déterminée et l'empreinte carbone estimée associée,
   - réception, par l'infrastructure informatique, d'une allocation de ressources informatiques pour l'exécution du travail parmi les allocations de ressources informatiques de la liste créée,
allocation au travail, par l'infrastructure informatique, de l'ensemble de ressources informatiques compris dans l'allocation de ressources informatiques reçue.

Grâce à l'invention, l'allocation de ressources informatiques dans une infrastructure informatique à au moins un travail à exécuter dépend d'une empreinte carbone dont une partie est déterminée dynamiquement, c'est-à-dire en fonction de la date d'allocation, de la durée d'utilisation et de caractéristiques énergétiques associées aux ressources informatiques de l'allocation, et dont une autre partie est une empreinte carbone matérielle des ressources informatiques de l'allocation, et notamment liée à la fabrication des ressources informatiques de l'allocation.

Ce calcul donne ainsi une mesure plus précise de l'impact écologique d'une allocation de ressources informatiques à un travail à exécuter que la notion qualitative d'efficacité énergétique décrite dans l'état de la technique. La disponibilité d'une telle mesure est essentielle pour pouvoir réduire l'impact énergétique des infrastructures informatiques, par exemple en favorisant des travaux énergétiquement plus sobres.

Dans un premier mode de réalisation, le procédé selon l'invention comprend, entre l'étape de création d'une liste et l'étape de réception d'une allocation de ressources informatiques parmi les allocations de ressources informatiques de la liste créée, les étapes de :
- transmission, à un utilisateur de l'infrastructure informatique, de la liste créée,
- sélection par l'utilisateur, via une interface utilisateur, d'une allocation de ressources informatiques pour l'exécution du travail parmi les allocations de ressources informatiques de la liste transmise,
l'étape de réception d'une allocation de ressources informatiques parmi les allocations de ressources informatiques de la liste créée étant alors une étape de réception de l'allocation sélectionnée.

Ce premier mode de réalisation est particulièrement avantageux lorsque plusieurs allocations de ressources informatiques sont trouvées. Il permet en effet de transmettre à l'utilisateur les différentes possibilités d'allocations ainsi que l'empreinte carbone associée à chacune d'elles, et de donner à cet utilisateur la possibilité de choisir une allocation en fonction de son impact écologique. En d'autres termes, ce mode de réalisation offre à l'utilisateur différents scenarii d'empreinte carbone en fonction des ressources informatiques attribuées.

Dans un deuxième mode de réalisation, le procédé selon l'invention comprend entre l'étape de création d'une liste et l'étape de réception d'une allocation de ressources informatiques parmi les allocations de ressources informatiques de la liste créée, une étape de :
- sélection automatique, par l'infrastructure informatique, de l'allocation de ressources informatiques ayant l'empreinte carbone la plus basse parmi les allocations de ressources informatiques de la liste créée,
l'étape de réception étant alors une étape de réception de l'allocation sélectionnée.

Ce deuxième mode de réalisation permet de favoriser des travaux énergétiquement plus sobres en leur allouant automatiquement les ressources informatiques pour lesquelles le ratio entre l'empreinte carbone (CO2 généré à la seconde) et le temps d'exécution du travail est le plus optimal. Le travail pourrait être exécuté plus rapidement sur d'autres ressources informatiques, mais le CO2 généré serait plus important. De même, le travail pourrait être exécuté plus longtemps mais le CO2 généré serait aussi plus important.

Le procédé selon l'invention peut également présenter une ou plusieurs caractéristiques complémentaires parmi les suivantes, considérées individuellement ou selon toutes les combinaisons techniquement possibles.

Selon une première variante de réalisation compatible avec tous les modes de réalisation précédents, l'étape de calcul de l'empreinte carbone pour chaque allocation comprend les sous-étapes suivantes :
- calcul de l'empreinte carbone de matériel à partir d'au moins une caractéristique matérielle dudit ensemble de ressources informatiques,
- calcul de l'empreinte carbone d'utilisation en réalisant les sous-étapes suivantes :
   o calcul d'un taux d'utilisation de chaque ressource informatique dudit ensemble de ressources informatiques, à partir de la requête, et d'au moins une caractéristique de composition de chaque ressource informatique dudit ensemble de ressources informatiques,
   o calcul d'une efficacité énergétique à partir du taux d'utilisation et d'au moins une caractéristique énergétique de chaque ressource informatique dudit ensemble de ressources informatiques,
   o conversion de l'efficacité énergétique en consommation de CO2 pour obtenir l'empreinte carbone d'utilisation,
- calcul de l'empreinte carbone associée à l'allocation par somme de l'empreinte carbone matérielle et de l'empreinte carbone d'utilisation.

Ainsi, l'empreinte carbone peut être aussi calculée en fonction d'un taux d'utilisation des ressources informatiques de l'ensemble des ressources informatiques de l'allocation. Ce taux d'utilisation est défini comme le ratio entre les capacités de calcul effectivement mobilisées pour le travail et les capacités de calcul disponibles et est accessible via les informations de la requête et des caractéristiques matérielles des ressources informatiques de l'ensemble des ressources informatiques de l'allocation. L'avantage est qu'il est possible de calculer encore plus précisément l'empreinte carbone générée par l'utilisation des ressources informatiques de l'allocation.

Ce calcul prend avantageusement en compte, pour chaque allocation, deux types d'empreinte carbone pour calculer une empreinte carbone globale au plus près de la réalité : l'empreinte carbone liée à la fabrication de l'ensemble de ressources informatiques de l'infrastructure informatique (et donc de celles de l'allocation), laquelle est stable dans le temps et déterminée à partir de caractéristiques de matériel des ressources informatiques disponibles dans des bases de données de référence, et l'empreinte carbone d'utilisation liée à l'utilisation de ces ressources, laquelle varie en fonction de l'utilisation et du temps et qui est avantageusement calculée dynamiquement.

Ainsi, ce calcul permet de donner une valeur précise et dynamique de l'empreinte carbone associée à une allocation de ressources informatiques à un travail à exécuter par l'infrastructure informatique.

Selon une première sous-variante de réalisation de la première variante de réalisation, la au moins une caractéristique matérielle dudit ensemble de ressources informatiques correspond à l'empreinte carbone associée au cycle de fabrication et au cycle de recyclage des ressources informatiques.

Selon une deuxième sous-variante de réalisation de la première variante de réalisation compatible avec la première sous-variante, la au moins une caractéristique énergétique de chaque ressource informatique dudit ensemble de ressources informatiques correspond à une dissipation thermique et/ou à une consommation électrique de la ressource informatique et/ou à la nature de l'énergie qui alimente la ressource informatique.

Selon une troisième sous-variante de réalisation de la première variante de réalisation compatible avec la première et/ou la deuxième sous-variante, la au moins une caractéristique de composition de chaque ressource informatique dudit ensemble de ressources informatiques correspond à un nombre d'unité de base de calcul et/ou à une répartition des composants de l'unité de base de calcul et/ou à une taille mémoire de la ressource informatique, le procédé comportant en outre l'étape de déterminer la au moins une caractéristique de composition de chaque ressource informatique dudit ensemble de ressources informatiques et l'étape de déterminer la disponibilité de chaque ressource informatique dudit ensemble de ressources informatiques.

Selon une quatrième sous-variante de réalisation de la première variante de réalisation compatible avec la première et/ou la deuxième et/ou la troisième sous-variante, l'allocation prend en compte une caractéristique de reconfiguration dynamique de chaque ressource informatique dudit ensemble de ressources informatiques, et selon lequel l'empreinte carbone d'utilisation dépend de la caractéristique de reconfiguration dynamique.

Selon une cinquième sous-variante de réalisation de la première variante de réalisation compatible avec la première et/ou la deuxième et/ou la troisième et/ou la quatrième sous-variante, la caractéristique énergétique de chaque ressource informatique dudit ensemble informatique comprend le mode d'obtention de l'énergie utilisée pour chaque instant de la durée d'utilisation de la ressource informatique.

Ainsi, l'empreinte carbone est avantageusement calculée au plus près de la réalité en tenant compte des variations temporelles de certaines caractéristiques énergétiques, parmi lesquelles, par exemple, la nature de l'énergie qui alimente les ressources informatiques de l'ensemble des ressources informatiques de l'allocation. La précision de l'empreinte carbone ainsi calculée est augmentée.

Selon une variante de réalisation compatible avec tous les modes, variantes et sous-variantes de réalisation précédents, à l'étape de détermination d'au moins une allocation de ressources informatiques pour exécuter le travail, une pluralité d'allocations sont déterminées, au moins deux allocations de la pluralité d'allocations ayant des dates d'allocation différentes, les dates d'allocation différentes étant déterminées à partir d'une évolution temporelle des de la caractéristiques énergétiques de la pluralité de chaque ressources informatiques dudit ensemble de ressources informatiques de l'infrastructure informatique du calculateur HPC.

Lorsque les caractéristiques énergétiques des ressources informatiques de l'ensemble de ressources informatiques de l'allocation varient dans le temps, et grâce au calcul dynamique de l'empreinte carbone, l'invention permet d'élaborer différents scenarii d'empreinte carbone à partir d'une allocation de ressources informatiques pour exécuter un travail et de soumettre ces scenarii à l'utilisateur.

Selon une variante de réalisation compatible avec tous les modes de réalisation précédents, le procédé comporte, après l'étape de calcul de l'empreinte carbone, une étape de détermination pour chaque allocation, d'un niveau de priorité d'exécution du travail en fonction de l'empreinte carbone estimée associée.

Ainsi, l'empreinte carbone est prise en compte dans le calcul d'un niveau de priorité pour l'exécution d'un travail. Cela permet d'accorder, par exemple, un niveau de priorité élevé aux allocations de ressources informatiques les plus sobres de sorte à les favoriser.

Un deuxième aspect de l'invention est un programme d'ordinateur comprenant des instructions qui, lorsque le programme est exécuté par un ordinateur, conduisent celui-ci à mettre en œuvre le procédé selon l'invention.

Un troisième aspect de l'invention est un support lisible par ordinateur comprenant des instructions qui, lorsque le programme est exécuté par un ordinateur, conduisent celui-ci à mettre en œuvre le procédé selon l'invention.

Un quatrième aspect de l'invention est un module d'allocation de ressources comprenant un gestionnaire de travaux réalisant les étapes de réception de la au moins une requête d'allocation, de détermination de la au moins une allocation de ressources informatiques, de création de liste, de réception d'allocation et d'allocation du procédé selon l'invention et un module de calcul d'empreinte carbone réalisant l'étape de calcul d'empreinte carbone du procédé selon l'invention.

Un cinquième aspect de l'invention est une infrastructure informatique comprenant le module d'allocation selon le quatrième aspect de l'invention.

Dans un mode de réalisation, l'infrastructure informatique comprend en outre un module d'ordonnancement configuré pour mettre en œuvre l'étape de détermination pour chaque allocation, d'un niveau de priorité d'exécution du travail en fonction de l'empreinte carbone estimée associée du procédé selon l'invention.

Avantageusement, le module d'allocation de ressources informatiques peut être formé par un gestionnaire de travaux et un gestionnaire d'empreinte carbone communiquant chacun indépendamment avec des ressources informatiques d'un HPC, et un module de comparaison communiquant à la fois avec le gestionnaire de travaux et le gestionnaire d'empreinte carbone.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre un schéma synoptique du procédé selon un premier mode de réalisation de l'invention ;
- La figure 2 représente schématiquement la structure générale de l'infrastructure informatique permettant de mettre en œuvre l'invention ;
- La figure 3 représente schématiquement la structure générale d'une lame de calcul de l'infrastructure informatique ;
- La figure 4 représente schématiquement un environnement de communication entre les ressources informatiques de l'infrastructure informatique et le module d'allocation de ressources informatiques illustrés sur la figure 2.
- La figure 5 montre un schéma synoptique illustrant l'enchaînement des sous-étapes de l'étape de calcul de l'empreinte carbone d'une allocation de ressources informatiques à un travail à exécuter ;
- La figure 6 montre un schéma synoptique illustrant l'enchaînement des sous-étapes de la sous-étape de calcul de la deuxième empreinte carbone d'une allocation de ressources informatiques à un travail à exécuter ;
- La figure 7 montre un schéma synoptique du procédé selon un deuxième mode de réalisation de l'invention ;
- La figure 8 montre un schéma synoptique du procédé selon un troisième mode de réalisation de l'invention.

### DESCRIPTION DETAILLEE

Sauf précision contraire, un même élément apparaissant sur des figures différentes présente une référence unique.

Un premier aspect de l'invention concerne un procédé mis en œuvre par ordinateur d'allocation de ressources informatiques dans une infrastructure informatique à au moins un travail à exécuter. Le procédé prend en compte l'empreinte carbone générée par l'exécution du travail pour l'allocation des ressources informatiques, cela dans le but de réduire l'impact écologique de l'infrastructure informatique. Préférentiellement, l'infrastructure informatique est un calculateur haute performance, aussi appelé « HPC » ou « calculateur HPC ».

On désigne ici par travail un logiciel ou un algorithme. De façon générale, un travail nécessite pour son exécution des ressources informatiques telles que, processeur, mémoire, etc. Par ailleurs, l'allocation de ressources informatiques à un travail à exécuter désigne les étapes de réception du travail, de détermination des ressources informatiques nécessaires à son exécution, et d'envoi du travail vers les ressources informatiques déterminées.

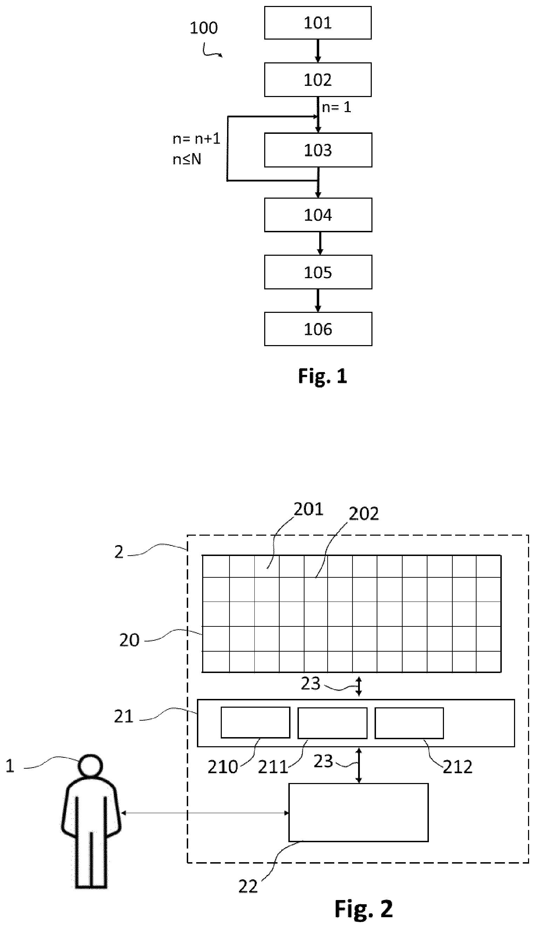

La figure 1 est un schéma synoptique d'un premier mode de réalisation du procédé 100 d'allocation de ressources informatiques selon l'invention.

La figure 2 montre une représentation schématique d'une infrastructure informatique 2 permettant de mettre en œuvre les étapes du procédé 100 selon l'invention.

Une telle infrastructure informatique 2 comprend une ou plusieurs grappes d'ordinateurs 20 formant un calculateur haute performance, ou « computer cluster » en anglais, un système, ou serveur, d'administration 21 et une interface utilisateur 22, par exemple une interface de ligne de commande « CLI » ou une API, de l'anglais « Application Programming Interface » traduit en français par « Interface de programmation d'application ».

La grappe d'ordinateurs 20 regroupe des ordinateurs indépendants 201, aussi appelés lames de calcul, et reliés entre eux par un réseau d'interconnexion 202. Un ordinateur indépendant 201 est un équipement informatique pour le calcul, de sorte que la grappe d'ordinateurs 20 apparaît depuis l'extérieur comme un calculateur unique à très forte puissance de calcul, aussi appelé calculateur hautes performances, ou calculateur HPC. Une lame de calcul comprend plusieurs nœuds de calcul.

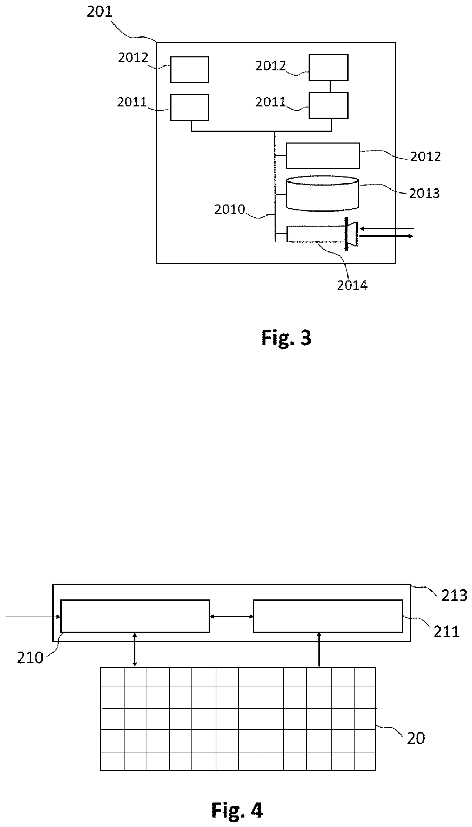

En référence à la figure 3, une lame 201 comprend un bus de communication 2010 connectant des unités de traitement 2011, des composants de mémoire vive 2012 ou RAM pour « Random Access Memory» en anglais, des éléments de stockage interne 2013 et une interface de communication 2014 configurée pour transmettre et recevoir des données.

Les unités de traitement 2011, aussi appelés nœuds, sont des unités centrales de traitement ou microprocesseurs ou CPU pour « Central Processing Unit » en anglais, et des microprocesseurs graphiques GPU pour « Graphic Processing unit » en anglais. Elles sont constituées d'un ou plusieurs cœurs, chacun des cœurs étant capable d'exécuter des instructions individuellement.

Le composant de mémoire vive 2012 est associé à une unité de traitement 2011 ou est commun aux différents composants de la lame 201. Les éléments de stockage 2013 sont par exemple des disques durs.

Le bus de communication 2010 permet la communication entre les différents composants de la lame 201 qui lui sont connectés. Les unités de stockage 2013 peuvent comporter du code exécutable, des logiciels ou des programmes mis en œuvre par le nœud 201. Les unités de traitement 2011 commandent l'exécution des codes exécutables et les composants de mémoire vive 2012 permettent d'enregistrer des paramètres crées ou modifiés au cours de cette exécution.

Les composants de la lame 201 déterminent les caractéristiques matérielles d'une lame et donc d'une ressource informatique. Celles-ci comprennent, sans y être limitées, le type de processeur, le nombre de cœurs, le nombre de cœurs par processeur, la taille mémoire.

On désigne plus généralement par « caractéristiques matérielles des ressources informatiques de l'infrastructure informatique » les caractéristiques matérielles associées à chacune des lames/ressources informatiques qui composent l'infrastructure informatique 2.

Le serveur d'administration 21 est un dispositif général de contrôle et de commande de l'infrastructure informatique 2. Il est conçu pour dialoguer, via l'interface utilisateur 22, avec des utilisateurs 1 souhaitant utiliser la grappe d'ordinateurs 20, celle-ci étant vue par les utilisateurs comme une machine unique.

Le serveur d'administration 21 est pourvu d'interfaces de communication 23 permettant notamment la réception de données d'entrée telles qu'un travail à exécuter, celui-ci étant entré par l'utilisateur 1 via l'interface utilisateur 22.

En référence à la figure 4, le serveur d'administration 21 comporte des moyens matériels et/ou logiciels lui permettant de mettre en œuvre le procédé 100 selon l'invention. Plus précisément, il comporte un module d'allocation de ressources informatiques 213 formé d'un gestionnaire de travaux 210 et d'un module de calcul d'empreinte carbone 211. Le gestionnaire de travaux 210 et le module de calcul d'empreinte carbone 211 communiquent indépendamment avec les ressources informatiques de l'infrastructure informatique 20. Par ailleurs, le gestionnaire de travaux 210 communique avec le module de calcul d'empreinte carbone 211. Le serveur d'administration peut en outre comprendre un module d'ordonnancement 212 qui communique avec le gestionnaire de travaux 210.

Nous allons maintenant décrire le procédé 100 d'allocation de ressources informatiques dans une infrastructure informatique 2 à au moins un travail à exécuter à l'aide de la figure 1 et des figures 4 à 8.

En référence à la figure 1, le procédé 100 comporte les étapes 101 à 106.

La première étape 101 consiste en la réception, par le module gestionnaire de travaux 210, d'une requête d'un travail à exécuter, la requête étant émise par un utilisateur 1 à l'infrastructure informatique 20 via l'interface utilisateur 22. Une requête comporte des données de commande et des données de contexte qui caractérisent le travail à exécuter. Un exemple de donnée de commande est par exemple la commande « submit » pour « soumettre » un travail.

Les données de contexte comprennent des ressources matérielles nécessaire à l'exécution du travail et une durée d'exécution.

Les ressources matérielles correspondent aux caractéristiques matérielles des ressources informatiques nécessaires à l'exécution du travail. Elles comprennent préférentiellement, sans y être limité, le nombre de nœuds, le type de processeur (GPU, CPU), des données de partition (nombre de cœurs par nœud, nombre de processeur par noeud), et une taille mémoire.

La durée d'exécution est la durée maximum prévue pour l'exécution du travail.

Un exemple de requête est par exemple : « $ submit_run -Nodes 12 - core_per_node 64 -with-gpu_per node 2 -max_duration 48h myjob ». Dans ce cas le travail « myjob » est soumis au gestionnaire de travaux 210 de l'infrastructure informatique 20 via la commande « submit » avec les données de contexte suivantes : 12 nœuds, 64 cœurs par nœud, 2 gpu par nœuds, et une durée maximum d'exécution prévue de 48h.

La deuxième étape 102 consiste en la détermination, par le gestionnaire de travaux 210, d'une ou plusieurs allocations de ressources informatiques en réponse à la requête.

La détermination 102 est réalisée en comparant les données de contexte de la requête avec les caractéristiques matérielles de l'infrastructure informatique et des caractéristiques de disponibilité de ces ressources. Cela signifie que le gestionnaire de travaux 210 reçoit des informations relatives aux caractéristiques matérielles de l'infrastructure informatique 20, par exemple le nombre d'unité de base de calcul/nombre d'unité de traitement, et/ou une répartition des composants de l'unité de base de calcul et/ou une taille mémoire desdites ressources informatiques, ainsi que des informations sur des caractéristiques de disponibilité de chacun de ces nœuds à une date et pour une durée déterminée.

Par allocation de ressources informatiques, on entend la détermination :
- d'un ensemble de ressources informatiques, c'est-à-dire de nœuds et/ou de lames de calcul, capable d'exécuter le travail, et présentant donc des caractéristiques matérielles correspondant aux données de contexte de la requête,
- d'une date d'allocation de l'ensemble de ressources informatiques, c'est-à-dire d'une date à partir de laquelle le travail va pouvoir être exécuté,
- d'une durée d'utilisation de l'ensemble de ressources informatiques, cette durée étant fonction de la durée d'exécution de la requête et des caractéristiques matérielles de l'ensemble de ressources matérielles. Cette durée d'utilisation peut être estimative, c'est-à-dire que le travail ne s'arrêtera pas s'il dépasse le temps imparti, ou enforcée, c'est-à-dire que le travail sera tué s'il dépasse cette durée d'utilisation.

Dans la suite de la demande, on désigne par « ensemble de ressources informatiques de l'allocation » l'ensemble de ressources informatiques déterminé à cette étape 102.

Si le gestionnaire de travaux 210 a différents matériels - différentes combinaison de ressources informatiques - pouvant répondre à la requête, une pluralité d'allocations sera déterminée. Par exemple, N allocations sont trouvées pour une unique requête.

A la fin de l'étape 102, le gestionnaire de travaux 210 transmet, ou envoie, la liste des N allocations de ressources informatiques pour exécuter le travail au module de calcul de l'empreinte carbone 211.

La troisième étape 103 est réalisée pour chaque allocation des N allocations déterminée à l'étape précédente 102.

La troisième étape 103 est une étape d'estimation, pour chaque allocation déterminée parmi les N allocations déterminées, d'une empreinte carbone associée à l'exécution du travail par les ressources informatiques de l'ensemble des ressources informatiques de l'allocation. Cette empreinte carbone est désignée par la suite par « empreinte carbone de l'allocation ». La troisième étape 103 est réalisée par le module de calcul d'empreinte carbone 211 du serveur d'administration 21.

Par empreinte carbone de l'allocation, on entend la quantité de gaz à effet de serre (GES) induite par et pendant l'exécution du travail par les ressources informatiques de l'allocation. Elle s'exprime par exemple en tonnes de CO2.

Plus précisément, l'empreinte carbone d'une allocation est liée à la fois à l'empreinte carbone dite « de matériel », générée par la fabrication des ressources informatiques de l'ensemble des ressources informatiques de l'allocation, et à l'empreinte carbone dite « d'utilisation », générée par et pendant le fonctionnement de ces ressources.

L'empreinte carbone de matériel générée par la fabrication des ressources informatiques de l'ensemble des ressources informatiques de l'allocation est calculée à partir d'au moins une caractéristique matérielle des ressources informatiques, celle-ci étant prédéterminée et disponible dans des bases de données de référence, par exemple dans une base de données EIME du Bureau Veritas^{™}. Les caractéristiques matérielles d'une ressource informatique comprennent préférentiellement l'empreinte carbone générée par l'extraction des minerais nécessaires à la fabrication de cette ressource, l'empreinte carbone générée par la fabrication elle-même, ainsi que l'empreinte carbone générée par son recyclage.

Cela signifie qu'à cette étape 103, le module de calcul d'empreinte carbone reçoit et détermine des informations relatives aux caractéristiques matérielles des ressources informatiques de l'ensemble de ressources informatiques de l'allocation.

L'empreinte carbone d'utilisation générée par l'utilisation et/ou le fonctionnement des ressources informatiques de l'ensemble des ressources informatiques de l'allocation est plus complexe à calculer car elle varie en fonction des paramètres temporels de l'allocation, c'est-à-dire de la date d'allocation et de la durée d'utilisation, et en fonction de caractéristiques énergétiques des ressources informatiques, celles-ci pouvant aussi varier dans le temps. Pour cela, le module de calcul d'empreinte carbone calcule une efficacité énergétique de chaque ressource informatique de l'ensemble de ressources informatiques de l'allocation puis convertit cette efficacité énergétique en empreinte carbone en appliquant un coefficient de conversion accessible via des bases de données de référence.

Par caractéristique énergétique de chaque ressource informatique, on entend des caractéristiques de consommation électrique, de dissipation thermique et/ou des caractéristiques liée à la nature de l'énergie qui alimente les ressources informatiques. Par nature de l'énergie on entend une ou plusieurs sources d'énergie, par exemple solaire, éolien, nucléaire. Ces caractéristiques sont connues lorsque le site qui héberge l'infrastructure informatique 2 a une source d'énergie qui lui est propre, par exemple une pile à combustible de type hydrogène, des panneaux solaires, un groupe électrogène à fuel, etc. Ces caractéristiques énergétiques, lorsqu'elles ne sont pas connues de prime abord, sont accessibles via des bases de données de référence, telle qu'Electricity Map^{™} en Europe.

Cela signifie qu'à cette étape 103, le module de calcul d'empreinte carbone reçoit et détermine des informations relatives aux caractéristiques énergétiques de chaque ressource informatique de l'ensemble de ressources informatiques de l'allocation.

A partir des caractéristiques énergétiques ainsi déterminées, et à partir des paramètres temporels de l'allocation, c'est-à-dire de la date d'allocation et de la durée d'utilisation, le module de calcul d'empreinte carbone détermine une efficacité énergétique de chaque ressource informatique en calculant une consommation électrique et en lui appliquant un coefficient relatif à la dissipation thermique et/ou à la nature de l'énergie. Plus l'énergie sera décarbonée ou verte, plus le coefficient sera petit, et plus l'efficacité énergétique sera grande.

Un autre coefficient peut être appliqué, qui prend en compte le taux d'utilisation des ressources informatiques, ce taux étant le rapport entre la capacité d'exécution effectivement utilisée par les ressources informatiques et la capacité d'exécution globale desdites ressources informatiques. Par exemple, un travail peut demander 10 nœuds de 64 cœurs, alors qu'il ne va utiliser que 32 cœurs par nœud. La capacité globale d'exécution de chaque nœud est de 64 cœurs et la capacité d'exécution effectivement utilisée est de 32 cœurs par nœud. En effet, l'empreinte carbone varie en fonction du taux d'utilisation d'une ressource informatique. Elle varie de plus de façon non proportionnelle avec ce taux.

Le taux d'utilisation des ressources informatiques est calculé, pour chaque allocation, à partir des données de contexte de la requête, des caractéristiques de composition des ressources informatiques de l'ensemble des ressources matérielles de l'allocation. Ce calcul nécessite que le module de calcul d'empreinte carbone 211 reçoive du gestionnaire de travaux 210 les données de contexte de la requête, et reçoive des ressources informatiques 20 de l'infrastructure informatique les caractéristiques de composition de ces ressources.

L'empreinte carbone générée par une allocation de ressources informatiques à un travail à exécuter est la somme de l'empreinte carbone matérielle générée par la fabrication des ressources informatiques et de l'empreinte carbone d'utilisation générée pendant le fonctionnement de ces ressources informatiques pour l'exécution du travail.

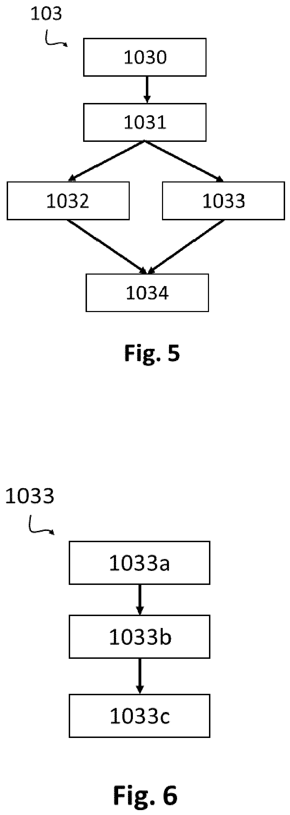

Le calcul de l'empreinte carbone est mieux décrit sur les figures 5 et 6 qui illustrent les sous-étapes 1031 à 1034 comprises dans l'étape 103.

Dans cet exemple de réalisation, la sous-étape 1030 consiste en la réception, par le module de calcul de l'empreinte carbone 211, d'au moins une caractéristique matérielle des ressources informatiques de l'ensemble de ressources informatiques de l'allocation. Ces caractéristiques matérielles peuvent être stockées par l'infrastructure informatique 2 ou par un dispositif extérieur accessible via un réseau.

La sous-étape 1031 consiste en la réception d'au moins une caractéristique énergétique de chaque ressource informatique dudit ensemble de ressources informatiques. Ces caractéristiques matérielles peuvent être stockées par l'infrastructure informatique 2 ou par un dispositif extérieur accessible via un réseau.

Les sous-étapes 1032 et 1033 peuvent être exécutées successivement ou en parallèle.

L'étape 1032 consiste en le calcul d'une empreinte carbone de matériel correspondant à l'empreinte carbone générée par la fabrication de chaque ressource informatique de l'ensemble des ressources informatiques de l'allocation, comme décrit précédemment.

L'étape 1033 consiste en le calcul d'une empreinte carbone d'utilisation correspondant à l'empreinte carbone générée par l'utilisation/fonctionnement de chaque ressource informatique de l'ensemble des ressources informatiques de l'allocation. Elle comprend les sous-étapes 1033a, 1033b et 1033c comme illustré sur la figure 6.

La sous-étape 1033a de la sous-étape 1033 consiste à calculer le taux d'utilisation de chaque ressource informatique de l'ensemble des ressources informatiques de l'allocation pendant l'exécution du travail.

La sous-étape 1033b consiste à calculer une efficacité énergétique à partir du taux d'utilisation et d'au moins une caractéristique énergétique de chaque ressource informatique dudit ensemble de ressources informatiques.

La sous-étape 1033c consiste à convertir l'efficacité énergétique calculée à l'étape précédente en consommation de CO2 en appliquant un facteur de conversion accessible dans des bases de données de référence pour obtenir l'empreinte carbone d'utilisation. La consommation en CO2 est par exemple une quantité en tonnes de CO2 et désigne l'empreinte carbone.

La dernière sous-étape 1034 de l'étape 103 consiste à sommer l'empreinte carbone de matériel et l'empreinte carbone d'utilisation de sorte à calculer l'empreinte carbone associée à l'allocation de ressources informatiques.

A la fin de l'étape 103, le module de calcul de l'empreinte carbone 211 transmet, ou envoie, par exemple sous forme d'un fichier, l'empreinte carbone associée à chaque allocation de ressources informatiques à un travail à exécuter au gestionnaire de travaux 211.

Dans un mode de réalisation préférentiel, l'empreinte carbone d'utilisation prend aussi en compte une caractéristique de reconfiguration dynamique de chaque ressource informatique de l'ensemble de ressources informatiques 20. On entend par « reconfiguration dynamique » la capacité d'une ressource informatique à modifier sa configuration pour consommer moins d'énergie ou plus. Par exemple, une caractéristique de reconfiguration dynamique d'un CPU est sa capacité à réduire sa fréquence pour qu'il consomme moins, ce qui permet que son empreinte carbone soit plus faible. La prise en compte de cette caractéristique dans l'empreinte carbone d'utilisation permet de privilégier les ressources informatiques ayant la capacité de se reconfigurer dynamiquement afin de réduire l'empreinte carbone d'utilisation.

En référence avec la figure 1, après l'étape de calcul de l'empreinte carbone 103, le procédé 100 comprend une étape 104 de création, par le gestionnaire de travaux 210 d'une liste des ressources informatiques annotée avec l'empreinte carbone générée par lesdites ressources informatiques pour chaque allocation de ressources informatiques déterminée. Cette liste, dont chaque ligne correspond à une allocation de ressources informatiques pour exécuter le travail, comprend les informations relatives à l'empreinte carbone calculée à l'étape 103, et les informations relatives à l'allocation déterminées à l'étape 102. Par exemple, une ligne de la liste peut être : « 5T CO2 empreinte carbone pour une fin du travail prévue dans 2 jours et pour une durée de 46 heures ».

L'étape 104 est suivie d'une étape de réception 105, par l'infrastructure informatique, d'une allocation de ressources informatiques pour l'exécution du travail parmi les allocations de ressources informatiques de la liste.

Enfin, l'étape 104 est suivie d'une étape 106 consistant en l'exécution de l'allocation au travail, par l'infrastructure informatique, de l'ensemble de ressources informatiques compris dans l'allocation de ressources informatiques reçue. L'allocation est réalisée seulement quand les ressources informatiques allouées sont libres. En attendant la libération des ressources informatiques, le module d'ordonnancement sait quels critères sont nécessaires à l'exécution du travail (nombre de nœuds, CPU, mémoire, etc) et donc sait quels types de ressources informatiques pourront être allouées.

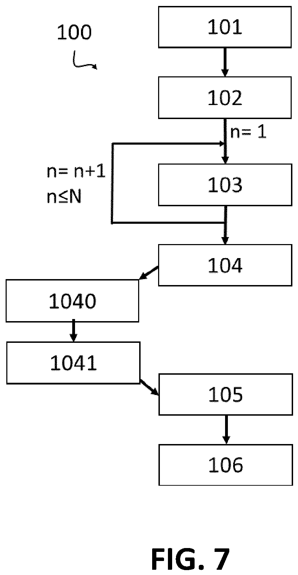

Selon un premier mode de réalisation illustré à la figure 7, le procédé 100 peut comprendre, entre l'étape de création 104 d'une liste et l'étape de réception 105 d'une allocation de ressources informatiques parmi les allocations de ressources informatiques de la liste, les étapes 1040 et 1041 de :
- transmission, à un utilisateur 1 de l'infrastructure informatique 20 , de la liste d'allocation des ressources informatiques annotée avec l'empreinte carbone pour l'exécution du travail soumis à l'infrastructure informatique 20,
- sélection par l'utilisateur 1, via l'interface utilisateur 22, d'une allocation de ressources informatiques pour l'exécution du travail parmi les allocations de ressources informatiques de la liste,

L'étape de réception 105 est alors une étape de réception, par l'infrastructure informatique 20, de l'allocation sélectionnée.

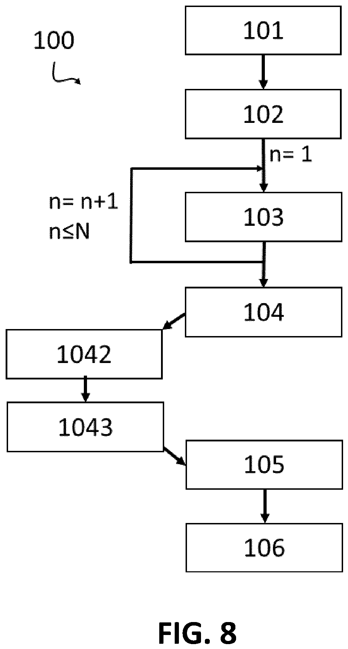

Dans un deuxième mode de réalisation illustré à la figure 8, le procédé 100 peut comprendre, entre l'étape de création 104 d'une liste et l'étape de réception 105 d'une allocation de ressources informatiques parmi les allocations de ressources informatiques de la liste, l'étape 1042 de :
- sélection automatique, par le calculateur HPC 2, de l'allocation de ressources informatiques ayant l'empreinte carbone la plus basse pour l'exécution du travail parmi les allocations de ressources informatiques de la liste,

L'étape de réception 105 étant alors une étape de réception, par l'infrastructure informatique 20, de l'allocation sélectionnée.

Le module d'allocation de ressources informatiques 213 peut aussi être configuré pour offrir l'option à l'utilisateur 1 de choisir s'il veut sélectionner manuellement une allocation de la liste, ou s'il veut que cette sélection soit automatique.

Selon une variante de réalisation de l'invention, à l'étape 102 de détermination d'au moins une allocation de ressources informatiques pour exécuter le travail, le gestionnaire de travaux 210 reçoit les informations relatives aux caractéristiques énergétiques de la pluralité des ressources informatiques 20 de l'infrastructure informatique 2, les caractéristiques énergétiques comprenant alors le mode d'obtention de l'énergie utilisée pour chaque instant de la durée d'utilisation. Le gestionnaire de travaux 210 détermine alors une allocation de ressources informatiques pour chaque date détectée. Cela est particulièrement intéressant pour prendre en compte les variations dans le temps des sources d'alimentation en énergie des ressources informatiques de l'infrastructure informatique et proposer des allocations de ressources informatiques ayant différentes empreintes carbone.

Par exemple, une première allocation de ressources informatiques exécutée à une première date d'allocation va engendrer une empreinte carbone E1. Le même travail, exécuté sur les mêmes ressources informatiques mais à une deuxième date d'allocation correspondant à un changement de la nature de l'énergie qui alimente lesdites ressources va engendrer une empreinte carbone E2 différente de E1. Le procédé permet ainsi de proposer différentes allocations ayant des empreintes carbones plus ou moins fortes, aussi sur les mêmes ressources. La disponibilité de ces scenarii d'empreinte carbone permet de rechercher et de favoriser les allocations les plus sobres. Le procédé peut aussi comprendre une étape supplémentaire 107 (non représentée sur les figures) après l'étape de calcul d'empreinte carbone 103. Cette étape 107 est mise en œuvre par le module d'ordonnancement 212.

A cette étape 107, le module d'ordonnancement reçoit, respectivement de la part du gestionnaire de travaux 210 et du module de calcul de l'empreinte carbone 211, les allocations de ressources informatiques à un travail à exécuter et l'empreinte carbone associée à chacune de ces allocations de ressources informatiques. Le module d'ordonnancement reçoit d'autre part les données de contexte de la requête ainsi que les caractéristiques matérielles de l'ensemble des ressources informatiques de l'allocation.

Le module d'ordonnancement 212 détermine ensuite un niveau de priorité d'exécution du travail en fonction d'au moins une règle de priorité prédéterminée, ledit niveau de priorité étant obtenu par comparaison de la règle de priorité avec la requête, les caractéristiques matérielles des ressources informatiques de l'ensemble des ressources informatiques de l'allocation et l'empreinte carbone associée à l'allocation. Ces informations de priorité sont ensuite ajoutées à la liste de l'étape 104.

Par exemple, une allocation de ressources informatiques à un travail à exécuter ayant une empreinte carbone faible aura un niveau de priorité élevée. A l'inverse, une allocation de ressources ayant une forte empreinte carbone aura un niveau de priorité faible. La prise en compte de l'empreinte carbone dans le niveau de priorité a l'avantage de permettre de favoriser les travaux les plus sobres, par exemple en les exécutant plus rapidement.

## Revendications

1. Procédé (100) mis en œuvre par ordinateur, d'allocation d'au moins une ressource informatique d'une infrastructure informatique (2) à au moins un travail à exécuter, l'infrastructure informatique (2) comprenant une pluralité de ressources informatiques (20), le procédé (100) comportant les étapes suivantes :
- réception (101) d'au moins une requête d'allocation de ressources informatiques pour exécuter un travail, la requête comprenant au moins une ressource matérielle et au moins une durée d'exécution du travail,
- détermination (102) d'au moins une allocation de ressources informatiques pour exécuter le travail à partir de la requête reçue et d'une disponibilité de la pluralité de ressources informatiques, chaque allocation déterminée comprenant :
o un ensemble de ressources informatiques déterminé parmi la pluralité de ressources informatiques (20),
o une date d'allocation de l'ensemble de ressources informatiques au travail,
o une durée d'utilisation de l'ensemble de ressources informatiques, ladite durée d'utilisation étant déterminée à partir de la date d'allocation et de la durée d'exécution du travail,
le procédé étant **caractérisé en ce qu'**il comporte les étapes suivantes :
- pour chaque allocation déterminée :
o estimation (103) d'une empreinte carbone à partir d'une empreinte carbone de matériel dudit ensemble de ressources informatiques, et à partir d'une empreinte carbone d'utilisation dudit ensemble de ressources informatiques pour l'exécution du travail,
- création (104) d'une liste comprenant chaque allocations déterminée et l'empreinte carbone estimée associée,
- réception (105), par l'infrastructure informatique (2), d'une allocation de ressources informatiques pour l'exécution du travail parmi les allocations de ressources informatiques de la liste créée,
- allocation (106) au travail, par l'infrastructure informatique (2), de l'ensemble de ressources informatiques compris dans l'allocation de ressources informatiques reçue.

2. Procédé (100) selon la revendication 1 **caractérisé en ce qu'**il comprend, entre l'étape de création (104) d'une liste et l'étape de réception (105) d'une allocation de ressources informatiques parmi les allocations de ressources informatiques de la liste créée, les étapes de :
- Transmission (1040), à un utilisateur (1) de l'infrastructure informatique (2), de la liste créée,
- sélection (1041) par l'utilisateur (1), via une interface utilisateur (22), d'une allocation de ressources informatiques pour l'exécution du travail parmi les allocations de ressources informatiques de la liste transmise,
l'étape de réception (105) d'une allocation de ressources informatiques parmi les allocations de ressources informatiques de la liste créée étant alors une étape de réception (105) de l'allocation sélectionnée.

3. Procédé (100) selon la revendication 1 **caractérisé en ce qu'**il comprend entre l'étape de création (104) d'une liste et l'étape de réception (105) d'une allocation de ressources informatiques parmi les allocations de ressources informatiques de la liste créée, une étape de :
- sélection automatique (1042), par l'infrastructure informatique, de l'allocation de ressources informatiques ayant l'empreinte carbone la plus basse parmi les allocations de ressources informatiques de la liste créée,
l'étape de réception (105) étant alors une étape de réception (105) de l'allocation sélectionnée.

4. Procédé (100) selon l'une quelconque des revendications précédentes dans lequel l'étape d'estimation (103) de l'empreinte carbone pour chaque allocation comprend les sous-étapes suivantes :
- calcul (1032) de l'empreinte carbone de matériel à partir d'au moins une caractéristique matérielle dudit ensemble de ressources informatiques,
- calcul (1033) de l'empreinte carbone d'utilisation en réalisant les sous-étapes suivantes :
o calcul (1033a) d'un taux d'utilisation de chaque ressource informatique dudit ensemble de ressources informatiques, à partir de la requête, et d'au moins une caractéristique de composition de chaque ressource informatique dudit ensemble de ressources informatiques,
o calcul (1033b) d'une efficacité énergétique à partir du taux d'utilisation et d'au moins une caractéristique énergétique de chaque ressource informatique dudit ensemble de ressources informatiques,
o conversion (1033c) de l'efficacité énergétique en consommation de CO2 pour obtenir l'empreinte carbone d'utilisation,
- calcul (1034) de l'empreinte carbone associée à l'allocation par somme de l'empreinte carbone matérielle et de l'empreinte carbone d'utilisation.

5. Procédé (100) selon la revendication 4 dans lequel la au moins une caractéristique matérielle dudit ensemble de ressources informatiques correspond à l'empreinte carbone associée au cycle de fabrication et au cycle de recyclage des ressources informatiques.

6. Procédé (100) selon l'une des revendications 4 à 5 dans lequel la au moins une caractéristique énergétique de chaque ressource informatique dudit ensemble de ressources informatiques correspond à une dissipation thermique et/ou à une consommation électrique de la ressource informatique et/ou à la nature de l'énergie qui alimente la ressource informatique et dans lequel la au moins une caractéristique de composition de chaque ressource informatique dudit ensemble de ressources informatiques correspond à un nombre d'unité de base de calcul et/ou à une répartition des composants de l'unité de base de calcul et/ou à une taille mémoire de la ressource informatique, le procédé comportant en outre l'étape de déterminer la au moins une caractéristique de composition de chaque ressource informatique dudit ensemble de ressources informatiques et l'étape de déterminer la disponibilité de chaque ressource informatique dudit ensemble de ressources informatiques.

7. Procédé (100) selon l'une des revendications 4 à 6 selon lequel l'allocation prend en compte une caractéristique de reconfiguration dynamique de chaque ressource informatique dudit ensemble de ressources informatiques, et selon lequel l'empreinte carbone d'utilisation dépend de la caractéristique de reconfiguration dynamique.

8. Procédé (100) selon l'une des revendications 4 à 7 dans lequel la caractéristique énergétique de chaque ressource informatique dudit ensemble informatique comprend le mode d'obtention de l'énergie utilisée pour chaque instant de la durée d'utilisation de la ressource informatique.

9. Procédé (100) selon la revendication 8 dans lequel, à l'étape de détermination (102) d'au moins une allocation de ressources informatiques pour exécuter le travail, une pluralité d'allocations sont déterminées, au moins deux allocations de la pluralité d'allocations ayant des dates d'allocation différentes, les dates d'allocation différentes étant déterminées à partir d'une évolution temporelle de la caractéristique énergétique de chaque ressource informatique dudit ensemble de ressources informatiques de l'infrastructure informatique (2).

10. Procédé (100) selon l'une quelconque des revendications 1 à 9 comportant, après l'étape de calcul (103) de l'empreinte carbone, une étape de détermination pour chaque allocation, d'un niveau de priorité d'exécution du travail en fonction de l'empreinte carbone estimée associée.

11. Programme d'ordinateur comprenant des instructions qui, lorsque le programme est exécuté par un ordinateur, conduisent celui-ci à mettre en œuvre le procédé (100) selon l'une des revendications 1 à 10.

12. Support d'enregistrement lisible par ordinateur comprenant des instructions qui, lorsqu'elles sont exécutées par un ordinateur, conduisent celui-ci à mettre en œuvre le procédé (100) selon l'une des revendications 1 à 10.

13. Module d'allocation (213) de ressources comprenant un gestionnaire de travaux (210) réalisant les étapes de réception (101) de la au moins une requête d'allocation, de détermination (102) de la au moins une allocation de ressources informatiques, de création de liste (104), de réception d'allocation (105), et d'allocation (106) du procédé (100) selon l'une quelconque des revendications 1 à 11 et un module de calcul (211) d'empreinte carbone réalisant l'étape de calcul (103) d'empreinte carbone du procédé (100) selon l'une quelconque des revendications 1 à 10.

14. Infrastructure informatique (2) comprenant le module d'allocation (213) selon la revendication 13.

15. Infrastructure informatique (2) selon la revendication précédente comprenant en outre un module d'ordonnancement (212) configuré pour mettre en œuvre l'étape de détermination pour chaque allocation, d'un niveau de priorité d'exécution du travail en fonction de l'empreinte carbone estimée associée du procédé selon la revendication 10.
